# EUROPEAN PATENT SPECIFICATION

(11) **EP 1 695 645 B1**
(45) Date of publication and mention of the grant of the patent: **13.02.2008**
(21) Application number: 05251184.7
(22) Date of filing: 28.02.2005
(51) Int. Cl.: A47J 27/00, A47J 36/06

(54) **Cook pot with heating cannister**
Kochtopf mit Heizkopf
Pot de cuisson avec récipient de chauffage

(43) Date of publication of application: 30.08.2006
(73) Proprietor: Kim, Byung-Doo, Seoul 158-755 (KR)
(72) Inventor: Kim, Byung-Doo, Seoul 158-755 (KR)
(74) Representative: Howe, Steven

(56) References cited:
- WO-A-02/091890
- FR-A- 1 264 369
- US-A- 4 591 698
- US-A- 4 738 858
- US-A1- 2003 010 767
- US-A1- 2003 062 360

## Description

The following invention relates to cooking appliances in general. More particularly, the invention is related to a cook pot which uses the lid to accelerate the heating and boiling of contents inside the cook pot.

Conventionally, most pots such as coffee pots, cook pots, rice cookers, and oriental pots for extracting herbs and medicines heat the contents from the bottom of the pot. With this method, it is not possible to heat objects quickly.

To solve this problem, the present applicant previously filed WO 021091890 for a cook pot with dual heat sources: a conventional and supplemental heat source. The conventional heat source heats the contents of the pot from the bottom, typically utilizing an external heat source, such as a gas range. The supplemental heat source consists of an electric heat generator which is attached to the lid and extends deep inside the pot. The supplemental heat source heats the contents from inside the pot. This supplemental heat source, when used in conjunction with the conventional heat source, accelerates the heating of the contents by heating the contents from the inside, as well as from the bottom.

The present application takes a further step in advancing quick heating techniques. In this invention, the supplemental heating mechanism is actually integrated inside of the lid. The lid has a top and a long cylindrical piece which fits inside the pot body and extends all the way down to the bottom of the pot. A heating band is located at the lower end of the cylindrical piece towards the bottom of the pot. This heating band heats the entire cylindrical piece, and thus the contents inside the pot.

The lower body of the pot protrudes away from the heating band creating enough distance and space to prevent the pot from over-heating, which would occur if the heating band contacted the lower pot body. Another important reason for such shaping of the pot body is so that the contents of the pot absorb the thermal energy generated by the heating band. In this way, the pot ultimately saves energy.

As compared to previous inventions, the supplemental heating mechanism does not take up an extraneous space inside of the pot, thus allowing the pot to hold more contents. In addition, since the heating mechanism is actually integrated inside of the lid, there is no additional heating element to clean.

The present invention will be described by way of example with reference to the accompanying drawings, in which:
Figure 1 is a perspective view of a cook pot of the present invention.
Figure 2 is an exploded perspective view illustrating a lid with an electric heating mechanism as well as the lower part of the pot.
Figure 3 is a cross sectional view of the present invention.
Figures 4 and 5 (a) - (c) are perspective views and cross sectional view of heating band which can be used in this invention.
Figure 6 shows an alternative example of a pot according to the present invention.

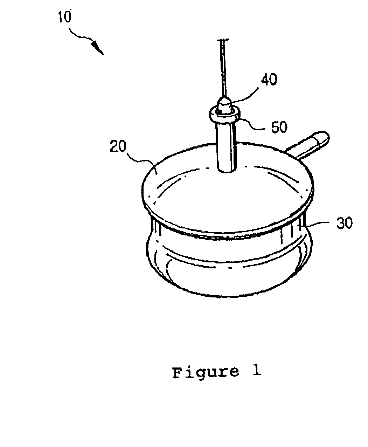

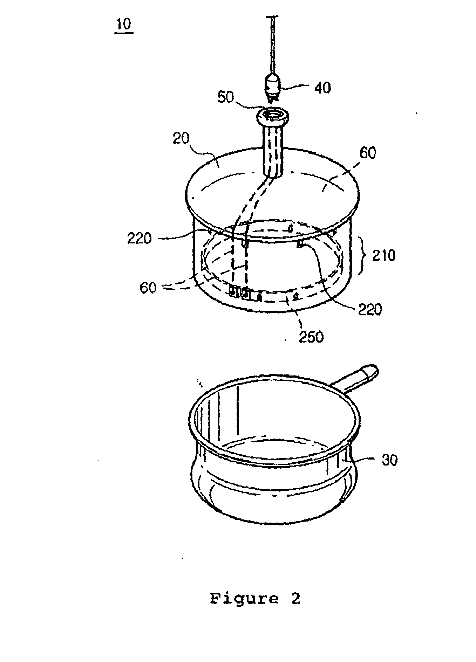

As shown in Figures 1 to 3, a cook pot comprises a pot body 30, a lid 20, and a socket 50 for connection to an electrical plug 40. A heating band 250 is integrally formed inside and towards the bottom of the lid 20. Electricity is supplied to the heating band 250 through wires 60 connected to the socket 50. The heating band heats the lower cylindrical part 210 of the lid 20 and thus promotes heating of the contents inside the pot. The upper cylindrical part of the lid has several steam deflation slits 220 which control the steam pressure within the pot.

The lower cylindrical part 210 of the lid 20 is of sufficient length such that it extends towards the bottom of the pot and is in proximity to the bottom of the pot. Inside the lower cylindrical part 210 is the heater band 250. The heating band 250, which is heated by electricity, is integrally formed inside the walls of the lower cylindrical part 210 of the lid 20. Accordingly, the heating band 250 has the same circular shape as the lower cylindrical part and is comprised of a metal or non-metal, such as ceramic or polymer, heat generator 251 and a band insulator 252.

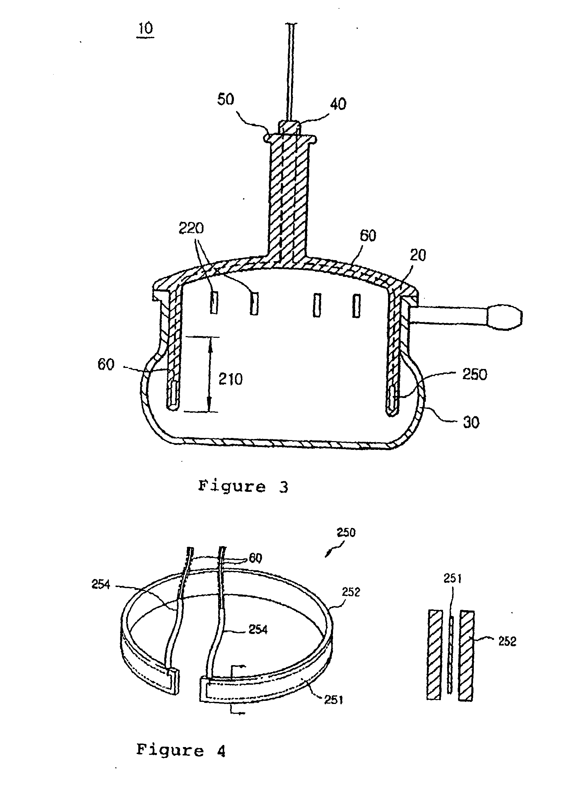

As seen in Figure 4, the heat generator 251 is insulated electrically with a band insulator 252. The band insulator is preferably made of a nonconductive material such as ceramic. The heat generator then heats the band insulator which, in turn, heats the lower cylindrical part 210 of the lid. The lower cylindrical part 210, in conjunction with heat from the bottom, accelerates the heating of the contents inside of the pot.

In order to prevent excess pressure from building inside of the pot, several steam deflation slits 220 are formed vertically on the upper cylindrical part of the lid. These slits 220 prevent excess pressure from building inside the pot and the contents from overflowing. The steam deflation slits 220 are closed when the lid 20 is rested on the pot 30. As the pressure builds, the lid 20 moves upwards and the steam deflation slits 220 open, thus releasing the excessive, high-pressure steam. This prevents potential explosions due to excessive steam build up produced by overheating. In addition, since the contents will not overflow, there is no need to constantly monitor the pot.

As seen in Figure 3, the lower part of the pot is expanded outwardly to provide space between the heating band and the pot. This expanded space prevents possible contact between the heating band and the pot wall. If the heating band contacted the pot wall, the pot wall would heat up, thus potentially burning the user. Another important reason for the outward shape of the lower part of the pot is so that the contents of the pot absorb the heat generated by the heating band.

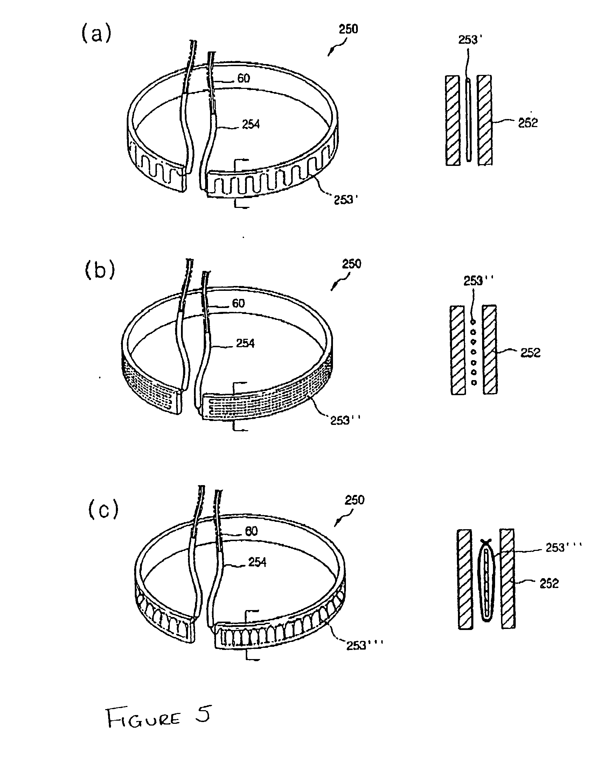

Figures 5 (a) - (c) illustrate other preferred embodiments of the heating band. In Figure 5 (a) and 5 (b), the heat generator 253 winds its way back and forth in the band insulator following an "S"type path. Figure 5 (c) illustrates the heat generator 253 in the shape of a coil wound inside the band insulator.

The final components to the cook pot are the addition of controllers and switches, as commonly known in the art, to automatically set cooking times and temperatures, detect pressures, and control electricity.

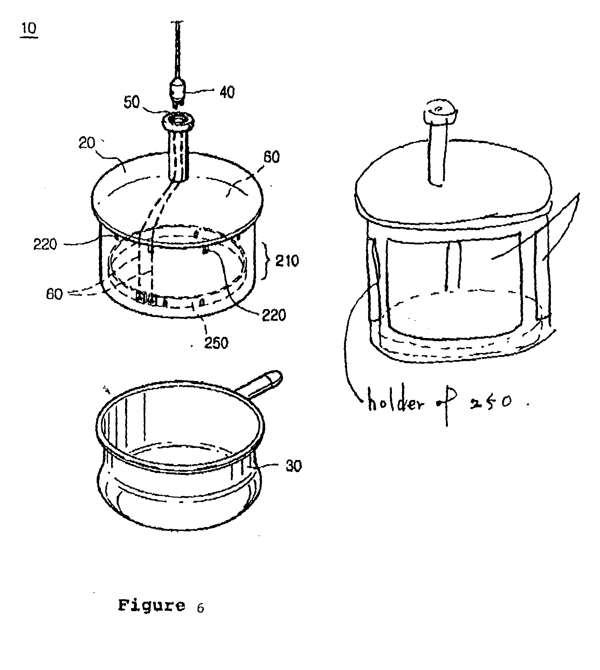

An alternative embodiment in shown in Figure 6 in which the cylindrical portion 210 includes cut-outs to assist with the heating of the contents of the pot.

Although the present invention has been described in detail with respect to certain preferred versions thereof, other versions are possible. Therefore, the scope of the claims should not be limited to the description of the preferred versions contained herein.

## Claims

1. A cook pot comprising:
a pot body (30);
a pot lid (20) including a cover portion and a substantially cylindrical portion depending from the cover portion and arranged to be received within the pot body (30);
a heating means (250)
an electrical connector (50) provided on the top portion of the pot lid (20) for connection to an electric power supply; and,
connectors (60) for electrically connecting the electrical connector (50) to the heating means (250) to supply power to the heating means (250) **characterized in that** the heating means (250) are provided within the substantially cylindrical portion of the pot lid (20) towards the opposite end of the substantially cylindrical portion of the pot lid (20) to the cover portion .

2. A cook pot according to claim 1, in which the pot lid (20) further includes at east one deflation slit (220) for relief of pressure, the at least one deflation slit 220) being located on the substantially cylindrical portion of the pot lid (20) towards the cover portion of the pot lid.

3. A cook pot according to claim 1 or claim 2, in which the pot body (30) includes a lower outwardly expanded portion in the regional of the heating means (250) in use.

4. A cook pot according to any one of the preceding claims in which the heating means (250) comprises a heating band including a heat generator (251) and a band insulator (252).

## Patentansprüche

1. Kochtopf, der Folgendes umfasst:
einen Topfkörper (30);
einen Topfdeckel (20) mit einem Abdeckungsabschnitt und einem im Wesentlichen zylindrischen Abschnitt, der vom Abdeckungsabschnitt herunterhängt und dazu angeordnet ist, im Topfkörper (30) aufgenommen zu werden;
ein Heizmittel (250)
einen am oberen Abschnitt des Topfdeckels (20) vorgesehenen elektrischen Verbinder (50) zum Anschließen an eine elektrische Energieversorgung; und,
Verbinder (60) zum elektrischen Anschließen des elektrischen Verbinders (50) am Heizmittel (250), um Energie zum Heizmittel (250) zuzuführen, **dadurch gekennzeichnet, dass** das Heizmittel (250) im im Wesentlichen zylindrischen Abschnitt des Topfdeckels (20) zum dem Abdeckungsabschnitt gegenüberliegenden Ende des im Wesentlichen zylindrischen Abschnitts des Topfdeckels (20) hin vorgesehen ist.

2. Kochtopf nach Anspruch 1, wobei der Topfdeckel (20) weiter mindestens einen Ablassschlitz (220) zum Ablassen von Druck umfasst, wobei sich der mindestens eine Ablassschlitz (220) am im Wesentlichen zylindrischen Abschnitt des Topfdeckels (20) zum Abdeckungsabschnitt des Topfdeckels hin befindet.

3. Kochtopf nach Anspruch 1 oder Anspruch 2, wobei der Topfkörper (30) einen unteren nach außen ausgedehnten Abschnitt im Bereich des Heizmittels (250) im Gebrauch umfasst.

4. Kochtopf nach einem der vorangehenden Ansprüche, wobei das Heizmittel (250) ein Heizband mit einem Wärmegenerator (251) und einen Bandisolator (252) umfasst.

## Revendications

1. Pot de cuisson comportant :
un corps de pot (30);
un couvercle de pot (20) comprenant une portion de recouvrement et une portion sensiblement cylindrique suspendue à la portion de recouvrement et disposée de façon être reçue à l'intérieur du corps de pot (30) ;
un moyen de chauffage (250);
un connecteur électrique (50) fourni sur la portion supérieure du couvercle de pot (20) pour être connecté à une source d'alimentation électrique ; et,
des connecteurs (60) servant à connecter électriquement le connecteur électrique (50) au moyen de chauffage (250) pour fournir du courant au moyen de chauffage (250), **caractérisé en ce que** le moyen de chauffage (250) est fourni à l'intérieur de la portion sensiblement cylindrique du couvercle de pot (20) vers l'extrémité opposée de la portion sensiblement cylindrique du couvercle de pot (20) par rapport à la portion de recouvrement.

2. Pot de cuisson selon la revendication 1, dans lequel le couvercle de pot (20) comprend en outre au moins une fente verticale de dégonflage (220) pour libérer la pression, ladite au moins une fente verticale de dégonflage (220) étant située sur la portion sensiblement cylindrique du couvercle de pot (20) vers la portion de recouvrement du couvercle de pot.

3. Pot de cuisson selon la revendication 1 ou la revendication 2, dans lequel le corps de pot (30) comprend une portion inférieure s'étendant vers l'extérieur dans la région du moyen de chauffage (250) lors de son utilisation.

4. Pot de cuisson selon l'une quelconque des revendications précédentes dans lequel le moyen de chauffage (250) comporte une bande de chauffage comprenant un générateur de chaleur (251) et un isolant de bande (252).
